# EUROPEAN PATENT SPECIFICATION

(11) **EP 2 624 617 B1**
(45) Date of publication and mention of the grant of the patent: **06.09.2017**
(21) Application number: 11827939.7
(22) Date of filing: 21.03.2011
(51) Int. Cl.: H04W 36/00, H04W 24/02, H04L 5/00

(54) **METHOD AND SYSTEM FOR REPORTING EXTRA MEASUREMENT RESULT**
VERFAHREN UND SYSTEM ZUR MELDUNG ZUSÄTZLICHER MESSERGEBNISSE
PROCÉDÉ ET SYSTÈME DE RAPPORT DE RÉSULTAT DE MESURE SUPPLÉMENTAIRE

(30) Priority: 28.09.2010 CN 201010503349
(43) Date of publication of application: 07.08.2013
(73) Proprietor: ZTE Corporation, Shenzhen, Guangdong 518057 (CN)
(72) Inventor: CHEN, Zhongming, Shenzhen Guangdong 518057 (CN); HUANG, Yada, Shenzhen Guangdong 518057 (CN)
(74) Representative: Novagraaf Technologies
(86) International application number: PCT/CN2011/072009
(87) International publication number: WO 2012/041043

(56) References cited:
- EP-A1- 2 566 227
- EP-A2- 2 426 987
- CN-A- 101 674 586
- CN-A- 101 729 114
- CATT ET AL: "Additional Measurement Reporting to Assist CA Handover", 3GPP DRAFT; R2-104511, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 16 August 2010 (2010-08-16), XP050451704, [retrieved on 2010-08-16]
- ZTE: "Additional measurment reporting", 3GPP DRAFT; R2-105344 ADDITIONAL MEASURMENT REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 3 October 2010 (2010-10-03), XP050452398, [retrieved on 2010-10-03]
- "Additional measurement support", 3GPP DRAFT; R2-103116 ON ADDITIONAL MEASUREMENT SUPPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 3 May 2010 (2010-05-03), XP050423095, [retrieved on 2010-05-03]
- CATT: "Additional measurement reporting", 3GPP DRAFT; R2-103527, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451107, [retrieved on 2010-06-22]
- ZTE: "Information provided to target eNB at handover", 3GPP DRAFT; R2-103720 EMAIL SUMMARY OF [70#10], 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628 - 20100702, 22 June 2010 (2010-06-22), XP050605225, [retrieved on 2010-06-22]
- NTT DOCOMO ET AL: "Measurement enhancements to support CA operation", 3GPP DRAFT; R2-104044 CA MEASUREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451353, [retrieved on 2010-06-22]
- ETSI MCC: "Draft Report of 3GPP TSG RAN WG2 meeting #71, Madrid, Spain, August 23 - 27, 2010", 3GPP DRAFT; R2-10XXXX_DRAFT_REPORT_RAN2_71_MADRID_V0.1 , 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xian, China; 20101011, 31 August 2010 (2010-08-31), XP050452286, [retrieved on 2010-08-31]
- "3rd Generation Partnership Project; Technical Specification Group Radio Access Network; Evolved Universal Terrestrial Radio Access (E-UTRA); Radio Resource Control (RRC); Protocol specification (Release 9)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 17 June 2010 (2010-06-17), pages 1-250, XP050441910, [retrieved on 2010-06-17]

## Description

### Field of the Invention

The present invention relates to the communication field, and in particular to a method, a device and a system for reporting additional measurement results.

### Background of the Invention

In the mobile communication system, in order to ensure the service quality and provide better service experience to the user, after the user equipment (abbreviated as UE) establishes a connection with the network in one certain cell, this UE still needs to measure the signal quality of the serving cell and the adjacent cells and select a suitable cell for handover so as to meet the mobility requirements.

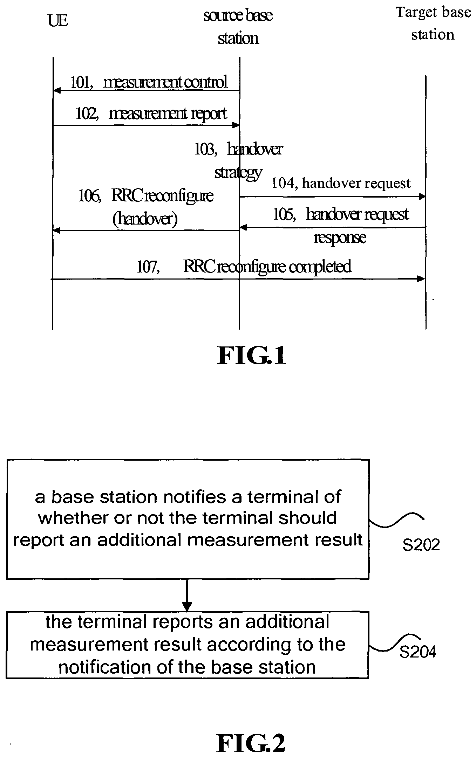

Fig. 1 is a schematic diagram of X2 interface handover process according to relevant art, and as shown in Fig. 1, in the long term evolution (abbreviated as LTE) system, the handover process of X2 interface includes the following steps:
Step 101: a source base station sends measurement control to UE under connected state;
Step 102: the UE executes measurement and reports a measurement report;
Step 103: the source base station carries out handover in combination with practical situations according to the received measurement report and selects a target cell;
Step 104: the source base station sends a handover request message to the target base station to which the target cell belongs, with the capability information, application server (abbreviated as AS) layer configuration information, radio resource management (abbreviated as RRM) configuration information and context information of the UE being carried therein;
Step 105: after having carried out processing such as resource reservation and so on, the target base station replies a handover request response message to the source base station, with the handover command information for the UE being carried therein, and the handover command information includes the target cell information (this target cell can be different from the target cell in the handover request message);
Step 106: the source base station sends a handover command (i.e. radio resource control (abbreviated as RRC) reconfigure) to the UE; and
Step 107: the UE sends a handover complete command to the target base station after the target cell carries out random access and completes it.

The handover process of S1 interface is similar to that of the above X2 interface, and the difference therebetween only lies in that the interaction message during the handover is forwarded via the MME.

The main basis of the above source base station carrying out handover decision is measurement results. In the LTE system, under the connected state, the particular process of measurement is as follows: the network side sends a measurement control message to the UE, wherein the measurement control message includes measurement identification (abbreviated as MID), measurement object (abbreviated as MO), report configuration (abbreviated as RC) and other relevant attributes of measurement, in which the measurement identification associates the measurement object with the report configuration together to form a complete measurement task. The measurement object includes the attributes (such as carrier frequency, adjacent cell list, etc.) of the measurement object, with each carrier frequency only configuring one measurement object, and the report configuration includes the attributes (such as event trigger or period report, triggered event definition (A1, A2, ...), number of reports, etc.) of the report configuration. The UE executes measurement and evaluation according to the measurement object and report configuration in the measurement control message, generates a measurement report according to the measurement result, and reports it to the network side, and at this moment the reported measurement report is referred to as normal measurement report. The network side carries out handover judgment according to the measurement report reported by the UE.

In order to provide higher data rate for the mobile users, the long-term evolution advance (abbreviated as LTE-A) proposes the carrier aggregation (abbreviated as CA) technology, and its object is to provide wider bandwidth for the UE which has corresponding capability and improve the peak rate of the UE. In the LTE, the maximum downlink transmission bandwidth supported by the system is 20 MHz, and carrier aggregation is to aggregate two or more component carriers (abbreviated as CC) to support a transmission bandwidth bigger than 20 MHz and not exceeding 100 MHz. The LTE-A UE with carrier aggregation capability can simultaneously transmit/receive data over multiple component carriers, and the following UE is such UE unless specifically noted otherwise. In the LTE-A, after having entered the connected state, the UE can communicate with the source base station via multiple component carriers (such as CC1 and CC2) simultaneously, the base station will designate one primary component carrier (abbreviated as PCC) for the UE by means of explicit configuration or according to protocol agreement, other component carriers are referred to as secondary component carriers (abbreviated as SCC), the serving cell on the DL PCC is referred to as primary cell (abbreviated as Pcell), and the serving cell on the DL SCC is referred to as secondary cell (abbreviated as Scell).

The handover process in the LTE-A is the same as that in the LTE. The source base station sends measurement control to the UE which is under connected state, the UE executes measurement and reports a measurement report, the source base station decides to carry out handover in combination with practical situations according to the received measurement report, selects the target primary cell, and sends a handover request message to the target base station to which the target primary cell belongs, with capability information, AS layer configuration information, RRM configuration information and context information of the UE being carried therein, the target base station replies a handover request response message to the source base station after having carried out processing such as resource reservation and so on, with handover command information for the UE being carried therein, the handover command information includes target primary cell information (this target primary cell can be different from that in the handover request message) and can also include one or more secondary cells, the UE receives the handover command (i.e. RRC reconfigure) of the source base station, and the UE sends a handover complete command to the target base station after the target primary cell carries out random access and completes it.

In order to coordinate with the target base station to configure one or more secondary cells, the handover request message sent by the source base station to the target base station will further include an optimal cell list and carry the signal quality (such as reference signal received power (abbreviated as RSRP)) and reference signal received quality (abbreviated as RSRQ) of these cells, and this optimal cell list and the signal quality of the cells in the list are referred to as additional measurement results. The source base station at least selects one optimal cell for each frequency in the available measurement report to form this optimal cell list. The target base station can configure Scell for the UE according to the above list, and of course, the configured Scell may not be a cell in the above list.

During the measurement process in relevant art, the terminal has to carry additional measurement results each time reporting the measurement report, which is inevitable to occupy a large amount of air interface resources and cause bigger system overhead.

3GPP Draft R2-104511 discloses a discussion and decision of additional measurement reporting to assist CA handover. It mentions that the behaviour whether or not to report additional measurement results should be configurable. 3GPP TS 36.331 ; 3rd Generation Partnership Project; Technical Specification Group Radio Access Network; Evolved Universal Terrestrial Radio Access (E-UTRA);Radio Resource Control (RRC);Protocol specification (Release9) discloses the conventional LTE measurement reporting as mentioned before which does not provide the reporting of additional measurements for frequencies other than the one specified by the measurement task.

### Summary of the Invention

The main object of the present invention is to provide a method, a device and a system for reporting additional measurement results so as to at least solve the above problem.

One aspect of the present invention provides a method for
reporting additional measurement results by a terminal which is a long-term evolution advanced user equipment with carrier aggregation capability, characterized by comprising: a terminal receiving an order of measurement tasks from a base station in order to configure it for triggering the measurement report, whereby each task specified a measurement object which includes the carrier frequency to be measured, an even which trigger measurement -reporting, and an indication whether or not the terminal should report at the given event an additional measurement result at a frequency different from the frequency specified by the measurement object.(S502); and a predetermined ranking mode which comprises one of the following: ranking according to RSRP and ranking according to RSRQ; and in response to an even triggering a measurement report, in the situation that the notification indicates that the additional measurement result needs to be reported, the terminal ranking a plurality of cells the carrier frequency specified by the measurement object as well as plurality of cells at a frequency different from the frequency specified by the measurement object according to the predetermined ranking mode, selecting an optimal cell at the frequency specified by the measurement object based on the ranking result and selecting an optimal cell at the frequency different from the frequency specified by the measurement object and reporting the optimal cell to the base station(S504)The base station is configured to notify terminals of whether or not to report the additional measurement result using an individual terminal as a unit, or notify terminals of whether or not to report the additional measurement result using one or multiple measurement tasks as a unit, or notify terminals of whether or not to report the additional measurement result using one or multiple measurement events as a unit.

If the base station is configured to notify terminals of whether or not to report the additional measurement result using one or multiple measurement events as a unit, the one or multiple measurement events are measurement events designated by a protocol, or the one or multiple measurement events are provided to the terminal by the base station via measurement task configuration information carried in a radio resource control (RRC) reconfigure command message or via a measurement event identifier list that needs to report the additional measurement result.

If the base station is configured to notify terminals of whether or not to report the additional measurement result using an individual terminal as a unit, each of the terminals is a terminal designated by a protocol, or a terminal notified by the base station via a RRC reconfigure command message.

The terminal designated by the protocol is a terminal with carrier aggregation capability.

If the base station is configured to notify terminals of whether or not to report the additional measurement result using one or multiple measurement tasks as a unit, the one or multiple measurement tasks are provided to the terminal by the base station via measurement task configuration information carried in an RRC reconfigure command message or via a measurement event identifier list that needs to report the additional measurement result.

The notification indicates whether or not to report the additional measurement result by one of the following ways: indicating the terminal of whether or not to report the additional measurement result via a value of an indication bit carried in a predetermined message; and indicating the terminal of whether or not to report the additional measurement result by determining whether or not to carry the indication bit in the predetermined message.

The predetermined message comprises an RRC reconfigure command message, wherein the predetermined message is an RRC reconfigure command message for configuring a measurement task for the terminal.

The terminal is configured to report the additional measurement result in an additional measurement result reporting order notified by the base station; or the terminal is configured to report the additional measurement result in an order designated in a configuration of a measurement task that triggers a measurement report; or the terminal is configured to report the additional measurement result in an order designated by the protocol.

The type of signal quality contained in the additional measurement result reported by the terminal is designated by the protocol or provided to the terminal by the base station via an RRC message.

The optimal cell included in the additional measurement result is determined by the following ways: the terminal ranking all the cells at the current frequency according to a predetermined ranking mode and selecting the optimal cell at the current frequency according to the ranking result.

The predetermined ranking mode comprises one of the following: ranking according to RSRP and ranking according to RSRQ, and the predetermined ranking mode is determined by one of the following: an order of measurement tasks that the base station configures for triggering the measurement report; an order notified by the base station; and an order designated by the protocol.

The signal quality of a cell reported by the terminal in the additional measurement result meets the following condition: the reported signal quality of the reported cell > (signal quality of the optimal cell in a normal measurement report - predefined offset).

Another aspect of the present invention provides a device for
reporting additional measurement results, and the device is a long-term evolution advance user equipment with carrier aggregation capability, characterized by comprising: a receiving module, configured to receive an order of measurement tasks from a base station in order to configure it for triggering the measurement report, whereby each task specified a measurement object which includes the carrier frequency to be measured, an even which trigger measurement -reporting, and an indication whether or not the terminal should report at the given event an additional measurement result at a frequency different from the frequency specified by the measurement object; and a predetermined ranking mode which comprises one of the following: ranking according to RSRP and ranking according to RSRQ ; and a reporting module, configured to, in response to an even triggering a measurement report , in the situation that the notification indicates that the additional measurement result needs to be reported, the terminal ranking a plurality of cells the carrier frequency specified by the measurement object as well as plurality of cells at a frequency different from the frequency specified by the measurement object according to the predetermined ranking mode, selecting an optimal cell at the frequency specified by the measurement object based on the ranking result and selecting an optimal cell at the frequency different from the frequency specified by the measurement object and reporting the optimal cell to the base station

Another aspect of the present invention provides a system for
for reporting additional measurement results, characterized by comprising a base station (32) and a terminal (34) which is a long-term evolution advanced user equipment with carrier aggregation capability, wherein the terminal (34) comprises: a notification module being configured to receive an order of measurement tasks from a base station(32) in order to configure it for triggering the measurement report, whereby each task specified a measurement object which includes the carrier frequency to be measured, an even which trigger measurement -reporting, and an indication whether or not the terminal should report at the given event an additional measurement result at a frequency different from the frequency specified by the measurement object; and a predetermined ranking mode which comprises one of the following: ranking according to RSRP and ranking according to RSRQ; and in response to an even triggering a measurement report , in the situation that the notification indicates that the additional measurement result needs to be reported, the terminal ranking a plurality of cells the carrier frequency specified by the measurement object as well as plurality of cells at a frequency different from the frequency specified by the measurement object according to the predetermined ranking mode, selecting an optimal cell at the frequency specified by the measurement object based on the ranking result and selecting an optimal cell at the frequency different from the frequency specified by the measurement object and reporting the optimal cell to the base station(32)

By way of the present invention, the terminal reports additional measurement results under the control of the base station, i.e. reporting in the situation that the base station notifies that reporting is needed, and not reporting in the situation that the base station notifies that reporting is not needed, which solves the problem in relevant art that the terminal reporting additional measurement results each time causes big system overhead, this method enables the base station to control whether the terminal reports the additional measurement results, which reduces the possibility of the terminal reporting the additional measurement results, thus reducing system overhead.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of the handover process of X2 interface according to relevant art;
Fig. 2 is a flowchart of a method for reporting additional measurement results according to the embodiments of the present invention;
Fig. 3 is a structural block diagram of a system for reporting additional measurement results according to the embodiments of the present invention;
Fig. 4 is a structural block diagram of a device for reporting additional measurement results according to the embodiments of the present invention;
Fig. 5 is a schematic diagram of a handover scenario according to embodiments 1 to 4; and
Fig. 6 is a preferred flowchart of a method for reporting additional measurement results according to the embodiments of the present invention.

### Detailed Description of Embodiments

The present invention will be described hereinafter in detail with reference to the accompanying drawings and in conjunction with embodiments. It needs to note that the embodiments of the present application and the features in the embodiments can be combined with each other if there is no conflict.

This embodiment provides a method for reporting additional measurement results, and Fig. 2 is a flowchart of a method for reporting additional measurement results according to the embodiments of the present invention, and as shown in Fig. 2, the method comprises the following steps:
Step S202:a terminal receives a notification from a base station, wherein the notification indicates whether or not the terminal should report an additional measurement result; and
Step S204:the terminal reports an additional measurement result according to the notification of the base station.

In the above method, the terminal can report additional measurement results under the control of the base station, i.e. reporting if the base station notifies that reporting is needed, and not reporting if the base station notifies that reporting is not needed, this method enables the base station to control whether or not the terminal reports the additional measurement results, which reduces the possibility of the terminal reporting the additional measurement results, thus reducing system overhead.

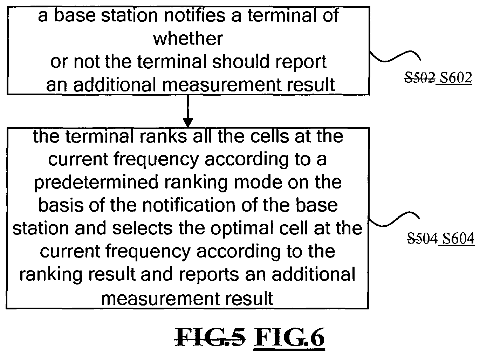

In order to be able to give convenience to the base station to parse and process the measurement results, the terminal can rank them in a certain order and then report them to the base station, and Fig. 6 is a preferred flowchart of a method for reporting additional measurement results according to the embodiments of the present invention, and as shown in Fig. 6, this method can comprise the following steps:
Step S602: a terminal receives a notification from a base station, wherein the notification indicates whether or not the terminal should report an additional measurement result; and
Step S604: in response to the base station's notification, the terminal ranks a plurality of cells at a current frequency according to a predetermined ranking mode and selects an optimal cell at the current frequency based on the ranking result and report the additional measurement result.

The above predetermined ranking mode for example can be: ranking according to RSRP or ranking according to RSRQ, and the predetermined ranking mode is determined by one of the following: an order of measurement tasks that the base station configures for triggering the measurement report; an order notified by the base station; and an order designated by the protocol.

During its practical application, the terminal can report the additional measurement result in an additional measurement result reporting order notified by the base station; or the terminal can also report the additional measurement result in an order designated in a configuration of a measurement task that triggers a measurement report; or the terminal reports the additional measurement result in an order designated by the protocol.

During the control, the base station can adjust or select the control precision by itself, and during its practical application, different control precisions can be selected according to different situations or according to the provisions of the protocol, and hereinafter several control precisions are exemplified illustratively:
(1)the base station notifies terminals of whether or not to report the additional measurement result using an individual terminal as a unit, by way of this method, the control precision is controlled to the level of single terminal, i.e. different report strategies are configured according to different terminal configurations (whether to report the additional measurement result), this method is relatively simple and the control overhead is relatively small; and it needs to note that in this situation to designate which terminals can be processed according to the protocol designation, for example, the terminal supporting carrier aggregation needs to carry, at this moment, the base station does not need to notify the terminal of whether or not to report the additional measurement result, because the protocol already designates the terminals, and both the base station and the terminal knows that; or, the base station can notify the terminal of which needs to report the additional measurement result via an RRC reconfigure command message.
(2)the base station notifies terminals of whether or not to report the additional measurement result using one or multiple measurement tasks as a unit, by way of this method, the control precision is controlled to the level of measurement task, i.e. different report strategies are configured according to different measurement tasks (whether to report the additional measurement result), this method can precisely control the terminal whether to report the additional measurement result and can reduce unnecessary reporting as much as possible, thus further reducing the overhead of air interface. In this situation, the base station can notify the terminal of the particular measurement task which needs to report the additional measurement result when configuring the measurement task via the RRC reconfigure command message, or the base station can notify the terminal via a measurement task identification list which needs to report the additional measurement result.
(3) the base station notifies terminals of whether or not to report the additional measurement result using one or multiple measurement events as a unit, by way of this method, the control precision is controlled to the level of measurement event, i.e. different report strategies are configured according to different measurement events (whether to report the additional measurement result), this method can precisely control the terminal whether to report the additional measurement result and can reduce unnecessary reporting as much as possible, thus further reducing the overhead of air interface. It needs to note that in this situation, to particularly designate which measurement event(s) can be processed according to protocol designation, at this moment, the base station does not need to designate this control is for which measurement event when notifying terminals of whether or not to report the additional measurement result, since the protocol already designates the particular measurement event, which is known to both the base station and the terminal; or the base station can notify the terminal of the particular measurement event via the RRC reconfigure command message, at this moment, the base station only needs to instruct the terminal to report which measurement event, which particularly can be implemented by adding an indication bit in the measurement task configuration information carried in the RRC reconfigure command message, or can be implemented by the base station sending a measurement event identification list which needs to report the additional measurement result, and preferably, the terminal can also be notified of not needing to report which measurement event, so that the control of the base station can be more flexible.

Preferably, the base station can notify the terminal of whether or not to report an additional measurement result by one of the following ways:
(1)notifying the terminal of whether or not to report an additional measurement result via the value of the indication bit carried in a predetermined message, for example, the value of the indication bit being 1 represents to report an additional measurement result, and the value thereof being 0 represents not to report an additional measurement result; and
(2) notifying the terminal of whether or not to report an additional measurement result by determining whether or not to carry an indication bit in a predetermined message, for example, the predetermined message including this indication bit represents to report and not including represents not to report, and this method can achieve backward compatibility.

Preferably, the above predetermined message can be used for configuring the RRC reconfigure command message of a measurement task for the terminal, and can also be used for configuring other RRC reconfigure command messages other than configuring the RRC reconfigure command message of a measurement task for the terminal.

According to the simulation result of NTT, those carriers with approximate signal quality have the best aggregation effects. Therefore, in order to reduce signaling overhead, the terminal can only include cells in which the signal quality phase differences between the optimal cells at other frequencies and the optimal cells in the normal measurement reports are within a predefined offset and the signal quality thereof. During its practical implementation, in the additional measurement result, the terminal can control the signal quality of the reported cell to meet the following condition: the reported signal quality of the cell > (signal quality of the optimal cell in a normal measurement report - predefined offset). In this case, the predefined offset can be provisioned by the protocol and can also be sent to the terminal via an RRC signaling.

Each time reporting the measurement report, the terminal needs the measurement result of the serving cell, including primary cell and secondary cell. The signal quality of the secondary cell can be also used as an additional measurement result, therefore, in the information element organization, the signal quality of the secondary cell and the additional measurement result carried by the terminal can be put together, i.e. the additional measurement result reported by the terminal can further include the measurement result of the secondary cell.

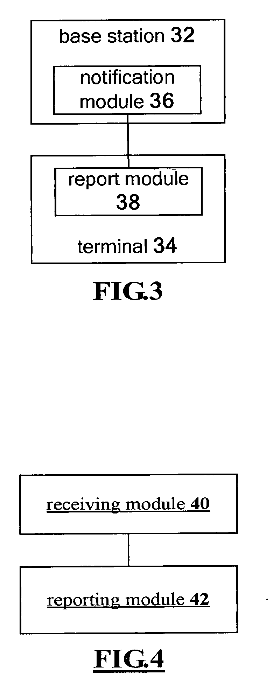

During its practical implementation, the additional measurement result is useful only when a handover occurs, but not each reported measurement report serves for handover, therefore an additional measurement result is carried therein each time reporting the measurement report, in many cases, these measurement results are useless but occupy air interface resources, thus in order to better meet the needs of practical implementation, the base station can use the following control modes: in the situation that it needs to carry out handover, the terminal is instructed to report an additional measurement result; and in the situation that it does not need to carry out handover, the terminal is instructed to not report an additional measurement result. In this way, the handover needs can be met in the situation that the number of reports of the terminal can be reduced as much as possible.Fig. 3 is a structural block diagram of a system for reporting additional measurement results according to the embodiments of the present invention, and as shown in Fig. 3, the system comprises a base station **32** and a terminal **34**, wherein the base station **32** includes: a notification module **36** being configured to notify the terminal **34** of whether or not to report an additional measurement result; and the terminal **34** includes: a report module **38** coupled to the notification module **36** being set to report an additional measurement result according to the notification of the base station **32**.

Preferably, the report module **38** can be configured to rank a plurality of cells at a current frequency according to a predetermined ranking mode, select an optimal cell at the current frequency based on the ranking result and report the additional measurement result.

Fig. 4 is a structural block diagram of a device for reporting additional measurement results according to the embodiments of the present invention, and as shown in Fig. 3, the device comprises a receiving module **40** and a reporting module **42**.

The receiving module **40**, configured to receive a notification from a base station, wherein the notification indicates whether or not the terminal should report an additional measurement result; and

The reporting module **42**, configured to, in response to the base station's notification, rank a plurality of cells at a current frequency according to a predetermined ranking mode, select an optimal cell at the current frequency based on the ranking result and report the additional measurement result.

Preferably, the reporting module **42** is further configured to report the additional measurement result in an additional measurement result reporting order notified by the base station; or the reporting module is configured to report the additional measurement result in an order designated in a configuration of a measurement task that triggers a measurement report; or the reporting module is configured to report the additional measurement result in an order designated by the protocol.

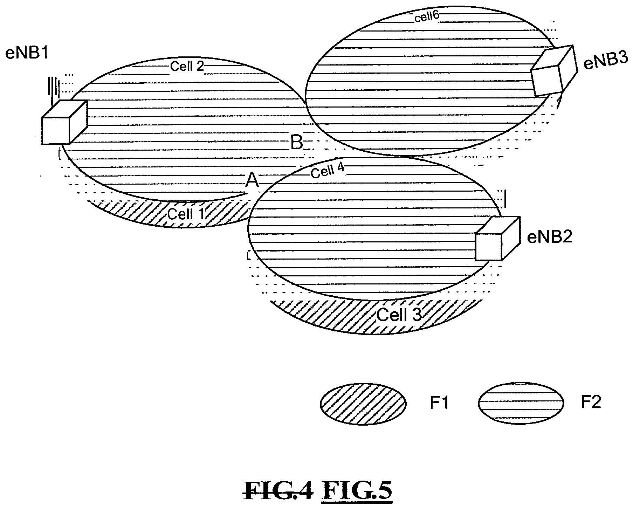

The embodiments 1 to 4 described hereinafter summarize the technical solution of the above multiple preferred embodiments, and embodiments 1 to 4 are based on the scenario shown in Fig.5.

### Embodiment 1

As shown in Fig. 5, UE1 configures cell1 at F1 and cell2 at F2 during the communication, wherein cell1 is Pcell and cell2 is Scell, and the base station configures the measurement task for UE1 via an RRC reconfigure command, and an indication of whether to report the additional measurement result is configured in this RRC reconfigure command for each task, wherein the indication has two values of TRUE and FALSE, in which TRUE represents that the additional measurement result needs to be reported, and FALSE represents that the additional measurement result does need to be reported. For the sake of backward compatibility, the indication can only have one value of TRUE, if this indication misses, then it is deemed that the additional measurement result does not need to be reported, and if this indication exists, then its value is TRUE, which represents that the additional measurement result needs to be reported. The configuration of measurement task is as follows:
MID = 1, MO = F1, RC = A2, report RSRP and RSRQ, rank according to RSRP, whether to report the additional measurement result = FALSE
MID = 2, MO = F2, RC = A2, report RSRP and RSRQ, rank according to RSRP, whether to report the additional measurement result = FALSE
MID = 3, MO = F1, RC = A3, report RSRP and RSRQ, rank according to RSRP, whether to report the additional measurement result = TRUE
MID = 4, MO = F2, RC = A6, report RSRP and RSRQ, rank according to RSRP, whether to report the additional measurement result = TRUE

UE1 moves to point A, and the reported measurement report is as shown in Table 1:

**Table 1**

| Measurement task identification | Signal quality of serving cell | Adjacent cell list | Additional measurement result |
|---|---|---|---|
| MID = 1 | Signal quality of Cell1 and Cell2 | Null | Since the indication of whether to report the additional measurement result is FALSE, the additional measurement result is null. |
| MID = 2 | Signal quality of Cell1 and Cell2 | Null | Since the indication of whether to report the additional measurement result is FALSE, the additional measurement result is null. |
| MID = 3 | Signal quality of Cell1 and Cell2 | Cell3 | Since the indication of whether to report the additional measurement result is TRUE, the measurement results of the optimal cells at other frequencies need to be carried therein, at this moment, it can include report contents (such |
| | | | as RSRP and RSRQ) the same as those of the measurement task (such as MID = 3) triggering this measurement report, select the optimal cell according to the ranking mode of this measurement task (MID = 3), for example, rank according to RSRP, then the cell which selects RSRP optimal is Cell4 at F2. Or, the protocol designation selects the optimal cell according to such as RSRP, or the base station additionally indicates the terminal to select the optimal cell according to RSRP or RSRQ via the RRC reconfigure and. Or, select the optimal cell according to the ranking mode (such as RSRP) of the measurement tasks at other frequencies (such as measurement task (MID = 4) at frequency F2). |
| MID = 4 | Signal quality of Cell1 and Cell2 | Cell4 | Since the indication of whether to report the additional measurement result is TRUE, the measurement results of the optimal cells at other frequencies need to be carried therein, and in this embodiment, it is Cell3 at F1. |

After having received the measurement report reported by UE1, base station 1 decides to switch UE to Cell4 at F2 according to the measurement report of MID = 4 with reference to the measurement report of MID = 3 and carries the optimal cell list in a handover prepare command, including Cell4 at F2 and Cell3 at F 1.

In the above embodiments, if the following measurement task is further included therein: MID = 5, MO = F3, RC = A3, report RSRQ, rank according to RSRQ, and whether to report the additional measurement result = TRUE, then the measurement results of the optimal cells at other frequencies (such as F3) are carried therein when reporting the measurement report of MID = 3, select the optimal cell according to that the ranking mode of this measurement task (MID = 3) is RSRP. Alternatively, select the optimal cell according to that the ranking mode of the measurement task (MID = 5) of other frequencies (such as F3) is RSRQ. If the protocol has designated, or the base station additionally indicates the terminal to select the optimal cell according to RSRP via the RRC reconfigure.

If MO = F3 and other measurement tasks are further configured, MID = 6, MO = F3, RC = A4, report RSRP, rank according to RSRP, and whether to report the additional measurement result = TRUE, the measurement results of the optimal cells at other frequencies (such as F3) are carried therein when reporting the measurement report of MID = 3, preferentially select the optimal cell according to RSRP in accordance with the ranking mode of the measurement tasks at other frequencies such as measurement task at frequency F3 (MID = 5 and 6). Or, preferentially select the optimal cell according to RSRP according to the contents (such as RSRP and RSRQ) reported by designated additional measurement results.

If it needs to rank the reported additional measurement result, the ranked signal quality can be according to the ranking mode (such as RSRP) of the measurement task (such as MID=3) triggering the measurement report, or can be designated by the protocol (such as RSRP), or the base station notifies the UE via an RRC reconfigure command (such as RSRP), or preferentially rank according to RSRP (secondly according to RSRQ) in accordance with the contents (such as RSRP and RSRQ) reported by designated additional measurement results. In this embodiment, reporting the measurement report of MID = 3 needs to rank the optimal cells at F2 and F3 based on this principle.

Regarding above configuration of whether to report the additional measurement result, the base station can also notify the terminal of a measurement task identification list which reports an additional measurement result, and the additional measurement result needs to be carried therein when reporting the measurement report of the measurement task identification in this list.

### Embodiment 2

As shown in Fig. 5, UE2 configures cell1 at F1 and cell2 at F2 during the communication, wherein cell1 is Pcell and cell2 is Scell, and the base station configures the measurement task for UE2 via an RRC reconfigure command, at the same time, the base station notifies the terminal that the measurement report of event A3 needs to carry an additional measurement task via this RRC reconfigure command or another RRC reconfigure command, and an indication of whether to report the additional measurement result is configured for each task, wherein the indication has two values of TRUE and FALSE, in which TRUE represents that the additional measurement result needs to be reported, and FALSE represents the additional measurement result does need to be reported. For the sake of backward compatibility, the indication can only have one value of TRUE, if this indication misses, then it is deemed that the additional measurement result does not need to be reported, and if this indication exists, then its value is certainly TRUE, which represents that the additional measurement result does need to be reported. In addition, the protocol designates the contents (such as RSRP) reported by the additional measurement result, or the base station notifies UE of the contents (such as RSRP) reported by the additional measurement result via an RRC reconfigure command. The configuration of measurement task is as follows:
MID = 1, MO = F1, RC = A2
MID = 2, MO = F2, RC = A2
MID = 3, MO = F1, RC = A3
MID = 4, MO = F2, RC = A6

UE2 moves to point A, and the reported measurement report is as shown in Table 2:

**Table 2**

| Measurement task identification | Signal quality of serving cell | Adjacent cell list | Additional measurement result |
|---|---|---|---|
| MID = 1 | Signal quality of Cell1 and Cell2 | Null | Since it is a measurement report triggered by event A2, the additional measurement result is null. |
| MID = 2 | Signal quality of Cell1 and Cell2 | Null | Since it is a measurement report triggered by event A2, the additional measurement result is |
| | | | null. |
| MID = 3 | Signal quality of Cell1 and Cell2 | Cell3 | Since it is a measurement report triggered by event A3, the measurement results (it is RSRP according to the indication) of the optimal adjacent cells at other frequencies need to be carried therein, select the optimal cell according to the contents (such as RSRP) reported by the designated additional measurement result, and in this embodiment, it is Cell4 at F2. |
| MID = 4 | Signal quality of Cell1 and Cell2 | Cell4 | Since it is a measurement report triggered by event A6, the additional measurement result is null. |

After having received it, base station 1 decides to switch UE to Cell4 at F2 according to the measurement report of MID = 4 with reference to the measurement report of MID = 3 and carries the optimal cell list in a handover prepare command, including Cell4 at F2 and Cell3 at F1.

The measurement report of the above event A3 needs to carry additional measurement results, which can be designated by the protocol, or the base station notifies the UE that the event related when it needs to carry additional measurement results is A3 via an RRC reconfigure command, or the base station notifies the UE that it needs to carry additional measurement results in the configuration information (such as configuration of RC) of the measurement task while configuring the measurement task for the UE via an RRC reconfigure command. Other events (such as A5 and so on) can also be designated. In addition, multiple events (such as A3 and A5) can also be instructed that they need to report additional measurement results.

When reporting the measurement report of MID = 3, it needs to report the measurement results of Cell1 and Cell2 and also needs to report the measurement results of Cell3 and Cell4. Since Cell1 is Pcell and equivalent to the serving cell in R8/9, it is reported in the measurement result of the original serving cell, the measurement results of other cells (such as Cell2/Cell3 and Cell4) can be reported according to the structure shown in Table 3.

**Table 3**

| Measurement task identification | Signal quality of serving cell | Adjacent cell list | Additional measurement result |
|---|---|---|---|
| MID = 3 | Signal quality of Cell1 | Cell3 and signal quality of Cell 3 | Cell2 and signal quality of Cell2 |
| | | | Cell4 and signal quality of Cell4 |

The ranking mode of the additional measurement results can be determined via a new indication, i.e. the base station notifies that the additional measurement results are reported according to RSRP or RSRQ via an RRC reconfigure message, and the optimal is in advance. Or, use the configuration of the measurement task triggering the measurement report again, such as the measurement report triggered by the measurement task of MID = 3, the ranking mode of carrying the additional measurement results is according to the ranking mode of reporting the measurement result of MID = 3, i.e. the configuration of triggerQuantity in RC. Or rank according to the contents (it is RSRP in this embodiment) reported by the designated additional measurement results.

### Embodiment 3

As shown in Fig. 5, UE1 and UE2 configure cell1 at F1 and cell2 at F2 during the communication, wherein cell1 is Pcell and cell2 is Scell, and the base station configures the measurement task for UE1 and UE2 via an RRC reconfigure command, at the same time, the base station notifies the measurement report of UE1 that it needs to carry an additional measurement result via the RRC reconfigure command and does not notify the measurement report of UE2 that it needs to carry an additional measurement result or notifies the measurement report of UE2 that it does not need to carry an additional measurement result, and an indication of whether to report the additional measurement result is configured for each task, wherein the indication has two values of TRUE and FALSE, in which TRUE represents that the additional measurement result needs to be reported, and FALSE represents the additional measurement result does need to be reported. For the sake of backward compatibility, the indication can only have one value of TRUE, if this indication misses, then it is deemed that the additional measurement result does not need to be reported, and if this indication exists, then its value is certainly TRUE, which represents that the additional measurement result needs to be reported. If judge according to the capability of the UE, since both UE1 and UE2 support carrier aggregation, then both UE1 and UE2 need to carry additional measurement results when reporting the measurement reports. The configuration of measurement task is as follows:
MID = 1, MO = F1, RC = A2
MID = 2, MO = F2, RC = A2
MID = 3, MO = F1, RC = A3
MID = 4, MO = F2, RC = A6

UE1 moves to point A, and the reported measurement report is as shown in Table 4:

**Table 4**

| Measurement task identification | Signal quality of serving cell | Adjacent cell list | Additional measurement result |
|---|---|---|---|
| MID = 1 | Signal quality of Cell1 and Cell2 | Null | Since the base station indicates that the additional measurement result needs to be reported, the measurement results of the optimal cells at other frequencies need to be carried therein, and in this embodiment, it is Cell4 in F2. |
| MID = 2 | Signal quality of Cell1 and Cell2 | Null | Since the base station indicates that the additional measurement result needs to be reported, the measurement results of the optimal cells at other frequencies need to be carried therein, and in this embodiment, it is Cell3 in F1. |
| MID = 3 | Signal quality of Cell1 and Cell2 | Cell3 | Since the base station indicates that the additional measurement result needs to be reported, the measurement results of the optimal cells at other frequencies need to be |
| | | | carried therein, and in this embodiment, it is Cell4 in F2. |
| MID = 4 | Signal quality of Cell1 and Cell2 | Cell4 | Since the base station indicates that the additional measurement result needs to be reported, the measurement results of the optimal cells at other frequencies need to be carried therein, and in this embodiment, it is Cell3 in F1. |

After having received it, base station 1 decides to switch UE to Cell4 at F2 according to the measurement report of MID = 4 which includes the signal quality of Cell3 and Cell 4 and carries the optimal cell list in a handover prepare command, including Cell4 at F2 and Cell3 at F1.

UE2 also moves to point A, and the reported measurement report is as shown in Table 5:

**Table 5**

| Measurement task identification | Signal quality of serving cell | Adjacent cell list | Additional measurement result |
|---|---|---|---|
| MID = 1 | Signal quality of Cell1 and Cell2 | Null | Since the base station does not indicate that the additional measurement result needs to be reported, the additional measurement result is null. |
| MID = 2 | Signal quality of Cell1 and Cell2 | Null | Since the base station does not indicate that the additional measurement result needs to be reported, the additional measurement result is null. |
| MID = 3 | Signal quality of Cell1 and Cell2 | Cell3 | Since the base station does not indicate that the additional measurement result needs to be reported, the additional measurement result is null. |
| MID = 4 | Signal quality of Cell1 and Cell2 | Cell4 | Since the base station does not indicate that the additional measurement result needs to be reported, the additional measurement result is null. |

After having received it, although the additional measurement report is not reported, base station 1 decides to switch UE to Cell4 at F2 according to the report of MID = 4 with reference to the measurement report of MID = 3 and carries the optimal cell list in a handover prepare command, including Cell4 at F2 and Cell3 at F1.

### Embodiment 4

As shown in Fig. 5, UE1 configures cell1 at F1 and cell2 at F2 during the communication, wherein cell1 is Pcell and cell2 is Scell, and the base station configures the measurement task for UE1 via an RRC reconfigure message. At the same time, the base station notifies the UE via an RRC reconfigure message that it only needs to carry the cell in which the signal quality of the optimal cells at other frequencies (it is RSRP in this embodiment) is higher than (the signal quality of the optimal cell in the measurement report -3 dB), the above 3 dB can be designated by the protocol or determined by the negotiation of base stations. The above compared signal quality can be sent to the UE by the base station via an RRC reconfigure command that it is RSRP or RSRQ, and can also be designated by the protocol to be RSRP or RSRQ. The configuration of measurement task is as follows:
MID = 1, MO = F1, RC = A2, whether to report the additional measurement result = FALSE
MID = 2, MO = F2, RC = A2, whether to report the additional measurement result = FALSE
MID = 3, MO = F1, RC = A3, whether to report the additional measurement result = TRUE
MID = 4, MO = F2, RC = A6, whether to report the additional measurement result = TRUE

Base stations 1 and 3 negotiates to determine that the optimal cell list transferred in the handover prepare command only needs to transfer a cell which is higher than the signal quality of the target Pcell subtracting 3dB. The above 3dB can also be designated by the protocol.

UE1 moves to point B, and the reported measurement report is as shown in Table 6:

**Table 6**

| Measurement task identification | Signal quality of serving cell | Adjacent cell list | Additional measurement result |
|---|---|---|---|
| MID = 1 | Signal quality of Cell1: RSRP = 41, -100 dbm, RSRQ = 4, -18 db, signal quality of Cell2: RSRP = 39, -102 dbm, RSRQ = 5, -17.5 db | Null | Since the indication of whether to report the additional measurement result is FALSE, the additional measurement result is null. |
| MID = 2 | Signal quality of Cell1: RSRP = 42, -99 dbm, RSRQ = 4, -18 db, signal quality of Cell2: RSRP = 40, -101 dbm, RSRQ = 6, -17 db | Null | Since the indication of whether to report the additional measurement result is FALSE, the additional measurement result is null. |
| MID = 3 | Signal quality of Cell1: RSRP = 41, -100 dbm, RSRQ = 4, -18 db, signal quality of Cell2: RSRP = 39, -102 dbm, RSRQ = 5, -17.5 db | Signal quality of Cell5: RSRP = 47, -94 dbm, RSRQ =1 0, -15 db Signal quality of Cell3: RSRP = 45, -96 dbm, RSRQ = 8, -16 db | Since the indication of whether to report the additional measurement result is TRUE, the measurement results of the optimal adjacent cells at other frequencies need to be carried therein, and it is null in this embodiment, the reason is that the signal quality of Cell6 in F2 is RSRP = 42, -99 dbm, RSRQ = 8, -16 db, which is lower than RSRP = 47 of Cell5 subtracting 3 dB. |
| MID = 4 | Signal quality of Cell1 (RSRP = 43, -98 dbm, RSRQ = 4, -18 | Signal quality of Cell6: RSRP = | Since the indication of whether to report the additional measurement result is TRUE, the |
| | db), signal quality of Cell2 (RSRP = 40, -101 dbm, RSRQ = 5, -17.5 db) | 42, -99 dbm, RSRQ = 8, -16 db Signal quality of Cell4: RSRP = 41, -100 dbm, RSRQ = 5, -17.5 db | measurement results of the optimal cells at other frequencies need to be carried therein, and in this embodiment, it is Cell5 and its signal quality in F1, the signal quality of Cell5: RSRP = 47, -94 dbm, RSRQ = 10, -15 db |

After having received it, the base station 1 decides to switch the UE to Cell5 at F1 according to the report of MID = 4 with reference to the measurement report of MID = 3 and carries the optimal cell list in the handover prepare command, including Cell5 at F1 and not including Cell6 at F2, because its signal quality is lower than that of Cell5 by -3 dB.

In summary, the solution provided by the embodiments of the present invention clarifies the activity of the terminal reporting the additional measurement results in carrier aggregation and saves signaling overhead.

It needs to note that the step shown in the flowcharts of the drawings can be executed in a computer system such as a set of computer executable instructions, and although the logical order is shown in the flowcharts, in some cases the steps shown or described here can be executed in an order different from this in some circumstances.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not limited to any particular combination of hardware and software.

Above description is only to illustrate the preferred embodiments but not to limit the present invention. Various alternations and changes to the present invention are apparent to those skilled in the art.

## Claims

1. A method for reporting additional measurement results by a terminal which is a long-term evolution advanced user equipment with carrier aggregation capability, **characterized by** comprising:
a terminal receiving (S502) a measurement task from a base station in order to configure it for triggering a measurement report, whereby the task specifies a measurement object which includes the carrier frequency to be measured, an event which triggers measurement -reporting, an indication whether or not the terminal should report at the given event an additional measurement result at a frequency different from the frequency specified by the measurement object and
a ranking mode which comprises one of the following: ranking according to RSRP and ranking according to RSRQ; and in response to an event triggering a measurement report, in the situation that the indication indicates that the additional measurement result needs to be reported, the terminal ranking a plurality of cells at the carrier frequency specified by the measurement object as well as a plurality of cells at a frequency different from the frequency specified by the measurement object according to the ranking mode, selecting, based on the ranking result, an optimal cell at the frequency specified by the measurement object and an optimal cell at the frequency different from the frequency specified by the measurement object and reporting the optimal cells to the base station(S504).

2. The method according to Claim 1, **characterized in that** the base station is configured to notify terminals of whether or not to report the additional measurement result using an individual terminal as a unit, or notify terminals of whether or not to report the additional measurement result using one or multiple measurement tasks as a unit, or notify terminals of whether or not to report the additional measurement result using one or multiple measurement events as a unit.

3. The method according to Claim 2, **characterized in that**, if the base station is configured to notify terminals of whether or not to report the additional measurement result using one or multiple measurement events as a unit, the one or multiple measurement events are measurement events designated by a protocol, or the one or multiple measurement events are provided to the terminal by the base station via measurement task configuration information carried in a radio resource control (RRC) reconfigure command message or via a measurement event identifier list that needs to report the additional measurement result.

4. The method according to Claim 2, **characterized in that**, if the base station is configured to notify terminals of whether or not to report the additional measurement result using an individual terminal as a unit, each of the terminals is a terminal designated by a protocol, or a terminal notified by the base station via a RRC reconfigure command message.

5. The method according to Claim 4, **characterized in that** the terminal designated by the protocol is a terminal with carrier aggregation capability.

6. The method according to Claim 2, **characterized in that**, if the base station is configured to notify terminals of whether or not to report the additional measurement result using one or multiple measurement tasks as a unit, the one or multiple measurement tasks are provided to the terminal by the base station via measurement task configuration information carried in an RRC reconfigure command message or via a measurement event identifier list that needs to report the additional measurement result.

7. The method according to Claim 1, **characterized in that** the notification indicates whether or not to report the additional measurement result by one of the following ways:
indicating the terminal whether or not to report the additional measurement result via a value of an indication bit carried in a predetermined message; and
indicating the terminal whether or not to report the additional measurement result by determining whether or not to carry the indication bit in the predetermined message.

8. The method according to Claim 7, **characterized in that** the predetermined message comprises an RRC reconfigure command message.

9. The method according to Claim 8, **characterized in that** the predetermined message is an RRC reconfigure command message for configuring a measurement task for the terminal.

10. The method according to Claim 1, **characterized in that** the terminal is configured to report the additional measurement result in an additional measurement result reporting order notified by the base station; or the terminal is configured to report the additional measurement result in an order designated in a configuration of a measurement task that triggers a measurement report; or the terminal is configured to report the additional measurement result in an order designated by the protocol.

11. The method according to Claim 1, **characterized in that** a type of signal quality contained in the additional measurement result reported by the terminal is designated by the protocol or provided to the terminal by the base station via an RRC message.

12. The method according to any one of Claims 1-11, **characterized in that** the signal quality of a cell reported by the terminal in the additional measurement result meets the following condition: the reported signal quality of the reported cell > (signal quality of an optimal cell in a normal measurement report - predefined offset).

13. A system for reporting additional measurement results, **characterized by** comprising a base station (32) and a terminal (34) which is a long-term evolution advanced user equipment with carrier aggregation capability, wherein
the terminal (34) comprises: a receiving module being configured to receive a measurement task from a base station(32) in order to configure it for triggering a measurement report, whereby the task specifies a measurement object which includes the carrier frequency to be measured, an event which triggers measurement -reporting, an indication whether or not the terminal should report at the given event an additional measurement result at a frequency different from the frequency specified by the measurement object and a ranking mode which comprises one of the following: ranking according to RSRP and ranking according to RSRQ; and a reporting module being configured in response to an event triggering a measurement report, in the situation that the indication indicates that the additional measurement result needs to be reported, to rank a plurality of cells at the carrier frequency specified by the measurement object as well as a plurality of cells at a frequency different from the frequency specified by the measurement object according to the ranking mode, to select, based on the ranking result, an optimal cell at the frequency specified by the measurement object and an optimal cell at the frequency different from the frequency specified by the measurement object and to report the optimal cells to the base station (32).

14. A terminal for reporting additional measurement results, and the terminal is a long-term evolution advance user equipment with carrier aggregation capability, **characterized by** comprising:
a receiving module, configured to receive a measurement task from a base station in order to configure it for triggering a measurement report, whereby the task specifies a measurement object which includes the carrier frequency to be measured, an event which triggers measurement -reporting, an indication whether or not the terminal should report at the given event an additional measurement result at a frequency different from the frequency specified by the measurement object and a ranking mode which comprises one of the following: ranking according to RSRP and ranking according to RSRQ ; and
a reporting module, configured to, in response to an event triggering a measurement report , in the situation that the indication indicates that the additional measurement result needs to be reported, to rank a plurality of cells at carrier frequency specified by the measurement object as well as plurality of cells at a frequency different from the frequency specified by the measurement object according to the ranking mode, to select, based on the ranking result, an optimal cell at the frequency specified by the measurement object and an optimal cell at the frequency different from the frequency specified by the measurement object and to report the optimal cells to the base station.

## Patentansprüche

1. Verfahren zum Berichten von zusätzlichen Messergebnissen durch ein Endgerät, das eine erweiterte Long-Term-Evolution-Teilnehmereinrichtung mit Carrier-Aggregation-Funktionalität ist, **dadurch gekennzeichnet, dass** es umfasst:
ein Endgerät (S502), das eine Messaufgabe von einer Basisstation empfängt, um es zum Auslösen eines Messberichts zu konfigurieren, wodurch die Aufgabe ein Messobjekt spezifiziert, das die zu messende Trägerfrequenz enthält, ein Ereignis, das das Berichten von Messungen auslöst, eine Anzeige, ob das Endgerät bei dem gegebenen Ereignis ein zusätzliches Messergebnis auf einer Frequenz, die sich von der durch das Messobjekt spezifizierten Frequenz unterscheidet, berichten soll oder nicht, und einen Rangordnungsmodus, der eines aus den Folgenden umfasst: Rangordnung nach RSRP und Rangordnung nach RSRQ; und das Endgerät in Antwort auf ein Ereignis, das einen Messbericht auslöst, in der Situation, dass die Anzeige anzeigt, dass das zusätzliche Messergebnis berichtet werden muss, eine Vielzahl von Zellen auf der durch das Messobjekt spezifizierten Trägerfrequenz sowie eine Vielzahl von Zellen auf einer Frequenz, die sich von der durch das Messobjekt spezifizierten Frequenz unterscheidet, nach dem Rangordnungsmodus rangordnet, basierend auf dem Rangordnungsergebnis eine optimale Zelle auf der durch das Messobjekt spezifizierten Frequenz und eine optimale Zelle auf der Frequenz, die sich von der durch das Messobjekt spezifizierten Frequenz unterscheidet, auswählt und die optimalen Zellen an die Basisstation (S504) berichtet.

2. Verfahren nach Anspruch 1, **dadurch gekennzeichnet, dass** die Basisstation dazu konfiguriert ist, Endgeräten mitzuteilen, ob das zusätzliche Messergebnis unter Verwendung eines einzelnen Endgerätes als eine Einheit berichtet werden soll oder nicht, oder Endgeräten mitzuteilen, ob das zusätzliche Messergebnis unter Verwendung von einer oder mehreren Messaufgaben als eine Einheit berichtet werden soll oder nicht, oder Endgeräten mitzuteilen, ob das zusätzliche Messergebnis unter Verwendung von einem oder mehreren Messereignissen als eine Einheit berichtet werden soll oder nicht.

3. Verfahren nach Anspruch 2, **dadurch gekennzeichnet, dass** wenn die Basisstation dazu konfiguriert ist, Endgeräten mitzuteilen, ob das zusätzliche Messergebnis unter Verwendung von einem oder mehreren Messereignissen als eine Einheit berichtet werden soll oder nicht, das eine oder mehrere Messereignisse Messereignisse sind, die durch ein Protokoll benannt werden, oder das eine oder mehrere Messereignisse dem Endgerät durch die Basisstation bereitgestellt werden über Messaufgaben-Konfigurationsinformationen, die in einer Radio Resource Control (RRC)-Rekonfigurationsbefehlsnachricht übertragen werden, oder über eine Messereignis-Identifiziererliste, die das zusätzliche Messergebnis berichten muss.

4. Verfahren nach Anspruch 2, **dadurch gekennzeichnet, dass** wenn die Basisstation dazu konfiguriert ist, Endgeräten mitzuteilen, ob das zusätzliche Messergebnis unter Verwendung eines einzelnen Endgerätes als eine Einheit berichtet werden soll oder nicht, jedes der Endgeräte ein Endgerät ist, das durch ein Protokoll benannt wird, oder ein Endgerät, das durch die Basisstation über eine RRC-Rekonfigurationsbefehlsnachricht mitgeteilt wird.

5. Verfahren nach Anspruch 4, **dadurch gekennzeichnet, dass** das durch das Protokoll benannte Endgerät ein Endgerät mit Carrier-Aggregation-Funktionalität ist.

6. Verfahren nach Anspruch 2, **dadurch gekennzeichnet, dass** wenn die Basisstation dazu konfiguriert ist, Endgeräten mitzuteilen, ob das zusätzliche Messergebnis unter Verwendung von einer oder mehreren Messaufgaben als eine Einheit berichtet werden soll oder nicht, die eine oder mehrere Messaufgaben dem Endgerät durch die Basisstation bereitgestellt werden über Messaufgaben-Konfigurationsinformationen, die in einer RRC-Rekonfigurationsbefehlsnachricht übertragen werden, oder über eine Messereignis-Identifiziererliste, die das zusätzliche Messergebnis berichten muss.

7. Verfahren nach Anspruch 1, **dadurch gekennzeichnet, dass** die Mitteilung anzeigt, ob das zusätzliche Messergebnis durch einen der folgenden Wege berichtet werden soll oder nicht:
Anzeigen an das Endgerät, ob das zusätzliche Messergebnis berichtet werden soll oder nicht, über einen Wert eines Anzeigebits, das in einer vorbestimmten Nachricht übertragen wird; und
Anzeigen an das Endgerät, ob das zusätzliche Messergebnis berichtet werden soll oder nicht, durch Bestimmen, ob das Anzeigebit in der vorbestimmten Nachricht übertragen werden soll oder nicht.

8. Verfahren nach Anspruch 7, **dadurch gekennzeichnet, dass** die vorbestimmte Nachricht eine RRC-Rekonfigurationsbefehlsnachricht umfasst.

9. Verfahren nach Anspruch 8, **dadurch gekennzeichnet, dass** die vorbestimmte Nachricht eine RRC-Rekonfigurationsbefehlsnachricht zum Konfigurieren einer Messaufgabe für das Endgerät ist.

10. Verfahren nach Anspruch 1, **dadurch gekennzeichnet, dass** das Endgerät dazu konfiguriert ist, das zusätzliche Messergebnis in einer Berichtsreihenfolge für zusätzliche Messergebnisse zu berichten, die durch die Basisstation mitgeteilt wird; oder das Endgerät dazu konfiguriert ist, das zusätzliche Messergebnis in einer Reihenfolge zu berichten, die in einer Konfiguration einer Messaufgabe benannt ist, die einen Messbericht auslöst; oder das Endgerät dazu konfiguriert ist, das zusätzliche Messergebnis in einer Reihenfolge zu berichten, die durch das Protokoll benannt ist.

11. Verfahren nach Anspruch 1, **dadurch gekennzeichnet, dass** eine Signalqualitätart, die in dem durch das Endgerät berichteten zusätzlichen Messergebnis enthalten ist, durch das Protokoll benannt oder dem Endgerät durch die Basisstation über eine RRC-Nachricht bereitgestellt wird.

12. Verfahren nach einem der Ansprüche 1-11, **dadurch gekennzeichnet, dass** die Signalqualität einer Zelle, die durch das Endgerät in dem zusätzlichen Messergebnis berichtet wird, die folgende Bedingung erfüllt: die berichtete Signalqualität der berichteten Zelle > (Signalqualität einer optimalen Zelle in einem normalen Messbericht - vordefinierter Offset).

13. System zum Berichten von zusätzlichen Messergebnissen, **dadurch gekennzeichnet, dass** es eine Basisstation (32) und ein Endgerät (34) umfasst, das eine erweiterte Long-Term-Evolution-Teilnehmereinrichtung mit Carrier-Aggregation-Funktionalität ist, wobei das Endgerät (34) umfasst: ein Empfangsmodul, das dazu konfiguriert ist, eine Messaufgabe von einer Basisstation (32) zu empfangen, um es zum Auslösen eines Messberichts zu konfigurieren, wodurch die Aufgabe ein Messobjekt spezifiziert, das die zu messende Trägerfrequenz enthält, ein Ereignis, das das Berichten von Messungen auslöst, eine Anzeige, ob das Endgerät bei dem gegebenen Ereignis ein zusätzliches Messergebnis auf einer Frequenz, die sich von der durch das Messobjekt spezifizierten Frequenz unterscheidet, berichten soll oder nicht, und einen Rangordnungsmodus, der eines aus den Folgenden umfasst: Rangordnung nach RSRP und Rangordnung nach RSRQ; und ein Berichtsmodul, das dazu konfiguriert ist, in Antwort auf ein Ereignis, das einen Messbericht auslöst, in der Situation, dass die Anzeige anzeigt, dass das zusätzliche Messergebnis berichtet werden muss, eine Vielzahl von Zellen auf der durch das Messobjekt spezifizierten Trägerfrequenz sowie eine Vielzahl von Zellen auf einer Frequenz, die sich von der durch das Messobjekt spezifizierten Frequenz unterscheidet, nach dem Rangordnungsmodus rangzuordnen, basierend auf dem Rangordnungsergebnis eine optimale Zelle auf der durch das Messobjekt spezifizierten Frequenz und eine optimale Zelle auf der Frequenz, die sich von der durch das Messobjekt spezifizierten Frequenz unterscheidet, auszuwählen und die optimalen Zellen an die Basisstation (32) zu berichten.

14. Endgerät zum Berichten von zusätzlichen Messergebnissen, und das Endgerät eine erweiterte Long-Term-Evolution-Teilnehmereinrichtung mit Carrier-Aggregation-Funktionalität ist, **dadurch gekennzeichnet, dass** es umfasst:
ein Empfangsmodul, das dazu konfiguriert ist, eine Messaufgabe von einer Basisstation zu empfangen, um es zum Auslösen eines Messberichts zu konfigurieren, wodurch die Aufgabe ein Messobjekt spezifiziert, das die zu messende Trägerfrequenz enthält, ein Ereignis, das das Berichten von Messungen auslöst, eine Anzeige, ob das Endgerät bei dem gegebenen Ereignis ein zusätzliches Messergebnis auf einer Frequenz, die sich von der durch das Messobjekt spezifizierten Frequenz unterscheidet, berichten soll oder nicht, und einen Rangordnungsmodus, der eines aus den Folgenden umfasst: Rangordnung nach RSRP und Rangordnung nach RSRQ; und
ein Berichtsmodul, das dazu konfiguriert ist, in Antwort auf ein Ereignis, das einen Messbericht auslöst, in der Situation, dass die Anzeige anzeigt, dass das zusätzliche Messergebnis berichtet werden muss, eine Vielzahl von Zellen auf durch das Messobjekt spezifizierter Trägerfrequenz sowie eine Vielzahl von Zellen auf einer Frequenz, die sich von der durch das Messobjekt spezifizierten Frequenz unterscheidet, nach dem Rangordnungsmodus rangzuordnen, basierend auf dem Rangordnungsergebnis eine optimale Zelle auf der durch das Messobjekt spezifizierten Frequenz und eine optimale Zelle auf der Frequenz, die sich von der durch das Messobjekt spezifizierten Frequenz unterscheidet, auszuwählen und die optimalen Zellen an die Basisstation zu berichten.

## Revendications

1. Procédé pour rapporter des résultats de mesure supplémentaires par un terminal qui est un équipement utilisateur avancé dans la technologie d'évolution à long terme avec capacité d'agrégation de porteuses, **caractérisé en ce qu'**il comprend :
un terminal recevant (S502) une tâche de mesure depuis une station de base afin de la configurer pour déclencher un rapport de mesure, au moyen duquel la tâche spécifie un objet de mesure qui inclut la fréquence porteuse à mesurer, un évènement qui déclenche un rapport de mesure, une indication si le terminal doit ou non rapporter à l'évènement donné un résultat de mesure supplémentaire à une fréquence différente de la fréquence spécifiée par l'objet de mesure, et un mode de classement qui comprend l'un des suivants : un classement selon RSRP et un classement selon RSRQ ; et en réponse à un évènement déclenchant un rapport de mesure, dans la situation où l'indication indique que le résultat de mesure supplémentaire a besoin d'être rapporté, le terminal classant une pluralité de cellules à la fréquence porteuse spécifiée par l'objet de mesure ainsi qu'une pluralité de cellules à une fréquence différente de la fréquence spécifiée par l'objet de mesure selon le mode de classement, sélectionnant, d'après le résultat de classement, une cellule optimale à la fréquence spécifiée par l'objet de mesure et une cellule optimale à la fréquence différente de la fréquence spécifiée par l'objet de mesure et rapportant les cellules optimales à la station de base (S504).

2. Procédé selon la revendication 1, **caractérisé en ce que** la station de base est configurée pour notifier à des terminaux s'il faut ou non rapporter le résultat de mesure supplémentaire à l'aide d'un terminal individuel en tant qu'unité, ou notifier à des terminaux s'il faut ou non rapporter le résultat de mesure supplémentaire à l'aide d'une ou de multiples tâches de mesure en tant qu'unité, ou de notifier à des terminaux s'il faut ou non rapporter le résultat de mesure supplémentaire à l'aide d'un ou de multiples évènements de mesure en tant qu'unité.

3. Procédé selon la revendication 2, **caractérisé en ce que**, si la station de base est configurée pour notifier à des terminaux s'il faut ou non rapporter le résultat de mesure supplémentaire à l'aide d'un ou de multiples évènements de mesure en tant qu'unité, les un ou multiples évènements de mesure sont des évènements de mesure désignés par un protocole, ou les un ou multiples évènements de mesure sont fournis au terminal par la station de base via des informations de configuration de tâche de mesure portées dans un message d'ordre de reconfiguration de commande de ressources radio (RRC) ou via une liste d'identifiants d'évènement de mesure qui a besoin de rapporter le résultat de mesure supplémentaire.

4. Procédé selon la revendication 2, **caractérisé en ce que**, si la station de base est configurée pour notifier à des terminaux s'il faut ou non rapporter le résultat de mesure supplémentaire à l'aide d'un terminal individuel en tant qu'unité, chacun des terminaux est un terminal désigné par un protocole, ou un terminal notifié par la station de base via un message d'ordre de reconfiguration RRC.

5. Procédé selon la revendication 4, **caractérisé en ce que** le terminal désigné par le protocole est un terminal avec capacité d'agrégation de porteuses.

6. Procédé selon la revendication 2, **caractérisé en ce que**, si la station de base est configurée pour notifier à des terminaux s'il faut ou non rapporter le résultat de mesure supplémentaire à l'aide d'une ou de multiples tâches de mesure en tant qu'unité, les une ou multiples tâches de mesure sont fournies au terminal par la station de base via des informations de configuration de tâche de mesure portées dans un message d'ordre de reconfiguration RRC ou via une liste d'identifiants d'évènement de mesure qui a besoin de rapporter le résultat de mesure supplémentaire.

7. Procédé selon la revendication 1, **caractérisé en ce que** la notification indique s'il faut ou non rapporter le résultat de mesure supplémentaire par l'une des manières suivantes :
indication au terminal s'il faut ou non rapporter le résultat de mesure supplémentaire via une valeur d'un bit d'indication porté dans un message prédéterminé ; et
indication au terminal s'il faut ou non rapporter le résultat de mesure supplémentaire en déterminant s'il faut ou non porter le bit d'indication dans le message prédéterminé.

8. Procédé selon la revendication 7, **caractérisé en ce que** le message prédéterminé comprend un message d'ordre de reconfiguration RRC.

9. Procédé selon la revendication 8, **caractérisé en ce que** le message prédéterminé est un message d'ordre de reconfiguration RRC pour configurer une tâche de mesure pour le terminal.

10. Procédé selon la revendication 1, **caractérisé en ce que** le terminal est configuré pour rapporter le résultat de mesure supplémentaire dans un classement de rapports de résultat de mesure supplémentaire notifié par la station de base ; ou le terminal est configuré pour rapporter le résultat de mesure supplémentaire dans un classement désigné dans une configuration d'une tâche de mesure qui déclenche un rapport de mesure ; ou bien le terminal est configuré pour rapporter le résultat de mesure supplémentaire dans un classement désigné par le protocole.

11. Procédé selon la revendication 1, **caractérisé en ce qu'**un type de qualité de signal contenu dans le résultat de mesure supplémentaire rapporté par le terminal est désigné par le protocole ou fourni au terminal par la station de base via un message RRC.

12. Procédé selon l'une quelconque des revendications 1 à 11, **caractérisé en ce que** la qualité de signal d'une cellule rapportée par le terminal dans le résultat de mesure supplémentaire satisfait la condition suivante : la qualité de signal rapportée de la cellule rapportée > (qualité de signal d'une cellule optimale dans un rapport de mesure normal - décalage prédéfini).

13. Système pour rapporter des résultats de mesure supplémentaires, **caractérisé en ce qu'**il comprend une station de base (32) et un terminal (34) qui est un équipement utilisateur avancé dans la technologie d'évolution à long terme avec capacité d'agrégation de porteuses, dans lequel
le terminal (34) comprend : un module récepteur qui est configuré pour recevoir une tâche de mesure depuis une station de base (32) afin de la configurer pour déclencher un rapport de mesure, au moyen duquel la tâche spécifie un objet de mesure qui inclut la fréquence porteuse à mesurer, un évènement qui déclenche un rapport de mesure, une indication si le terminal doit ou non rapporter à l'évènement donné un résultat de mesure supplémentaire à une fréquence différente de la fréquence spécifiée par l'objet de mesure, et un mode de classement qui comprend l'un des suivants : un classement selon RSRP et un classement selon RSRQ ; et un module de rapport qui est configuré en réponse à un évènement déclenchant un rapport de mesure, dans la situation où l'indication indique que le résultat de mesure supplémentaire a besoin d'être rapporté, pour classer une pluralité de cellules à la fréquence porteuse spécifiée par l'objet de mesure ainsi qu'une pluralité de cellules à une fréquence différente de la fréquence spécifiée par l'objet de mesure selon le mode de classement, pour sélectionner, d'après le résultat de classement, une cellule optimale à la fréquence spécifiée par l'objet de mesure et une cellule optimale à la fréquence différente de la fréquence spécifiée par l'objet de mesure et pour rapporter les cellules optimales à la station de base (32).

14. Terminal pour rapporter des résultats de mesure supplémentaires, et le terminal est un équipement utilisateur avancé dans la technologie d'évolution à long terme avec capacité d'agrégation de porteuses, **caractérisé en ce qu'**il comprend :
un module récepteur, configuré pour recevoir une tâche de mesure depuis une station de base afin de la configurer pour déclencher un rapport de mesure, au moyen duquel la tâche spécifie un objet de mesure qui inclut la fréquence porteuse à mesurer, un évènement qui déclenche un rapport de mesure, une indication si le terminal doit ou non rapporter à l'évènement donné un résultat de mesure supplémentaire à une fréquence différente de la fréquence spécifiée par l'objet de mesure, et un mode de classement qui comprend l'un des suivants : un classement selon RSRP et un classement selon RSRQ ;
et un module de rapport, configuré pour, en réponse à un évènement déclenchant un rapport de mesure, dans la situation où l'indication indique que le résultat de mesure supplémentaire a besoin d'être rapporté, classer une pluralité de cellules à une fréquence porteuse spécifiée par l'objet de mesure ainsi qu'une pluralité de cellules à une fréquence différente de la fréquence spécifiée par l'objet de mesure selon le mode de classement, pour sélectionner, d'après le résultat de classement, une cellule optimale à la fréquence spécifiée par l'objet de mesure et une cellule optimale à la fréquence différente de la fréquence spécifiée par l'objet de mesure et pour rapporter les cellules optimales à la station de base.
